(19) Europäisches Patentamt
European Patent Office
Office européen des brevets

(11) **EP 2 610 501 B1**

(12) **EUROPEAN PATENT SPECIFICATION**

(45) Date of publication and mention
of the grant of the patent:
**23.07.2014 Bulletin 2014/30**

(51) Int Cl.:
**F04D 15/00** *(2006.01)*

(21) Application number: **11382410.6**

(22) Date of filing: **29.12.2011**

(54) **Method for stopping a hydraulic pump with adjustable rotating speed in a hydraulic system and hydraulic pump controller device**

Verfahren zum Anhalten einer Hydraulikpumpe mit anpassbarer Rotationsgeschwindigkeit in einem Hydrauliksystem und Hydraulikpumpensteuerungsvorrichtung

Procédé d'arrêt d'une pompe hydraulique avec vitesse de rotation réglable dans un système hydraulique et dispositif de contrôleur de pompe hydraulique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.07.2013 Bulletin 2013/27**

(73) Proprietor: **Espa 2025, S.L.**
**17820 Banyoles (ES)**

(72) Inventors:
• **Jimenez Descalzo, Francesc**
**17820 Banyoles (ES)**
• **Tubert Blanch, Pere**
**17820 Banyoles (ES)**

(74) Representative: **Sugrañes Patentes y Marcas**
**Calle Provenza, 304**
**08008 Barcelona (ES)**

(56) References cited:
**EP-A1- 0 978 657      WO-A1-2006/136202**
**DE-A1- 3 503 741      JP-A- 59 176 496**

## Description

## Technical Field of the Invention

The objective of the invention is a method and device for stopping a hydraulic pump with adjustable rotating speed in a hydraulic system.

## Background of the Invention

Hydraulic pumps installed in a system such as a water pumping system must provide enough pressure to said system so that water flow rate is kept stable at different outlets regardless of the number of open outlets in said system. For this purpose, devices for controlling and stopping hydraulic pumps which allow varying the rotating speed of the pump to allow matching the pressure of the system to a pre-established set point pressure regardless of the valves which are open or closed in said system are known. WO2006136202 discloses a method for operating variable frequency drive pumps

It is necessary that when all the outlets of the system are closed, the hydraulic pumps of said system are stopped to prevent increasing the pressure of the system unnecessarily in addition to involving an unnecessary pump wear which reduces its service life.

A known solution is to provide the hydraulic systems with a flow rate sensor which allows stopping the pumps when the flow rate of the system is zero, i.e., all the outlet valves of the system are closed.

Use of a flow rate sensor is expensive therefore said flow rate sensor is disregarded in many cases and the stop feeding frequency of the pump is manually determined by simple inspection of the feeding frequency of the motor of the pump when all the valves of the system are closed and, therefore, the flow rate is zero. This manual method has the serious drawback that the operator can determine a stop feeding frequency of the motor of the pump higher or lower than the optimum stop feeding frequency of the pump, therefore the pump can keep operating when the flow rate is zero or it can be stopped earlier, causing unwanted pressure drops in the pressure of the system.

An objective of the present invention is to disclose a method and device which allow optimally stopping the hydraulic pump when the flow rate of the system is zero with the need of using a flow rate sensor.

## Summary of the Invention

The method for stopping a hydraulic pump with adjustable rotating speed in a hydraulic system pre-established at a set point pressure of the present invention is of the type which comprises the steps of comparing the pressure of the fluid of the system with the set point pressure of the system and varying the rotating speed of said pump to match the pressure of the system with the pre-established set point pressure; and stopping the pump if the feeding frequency of said pump drops below a previously determined stop feeding frequency until the pressure of the system drops again below the set point pressure. The method is essentially **characterized in that** the stop feeding frequency of the pump is determined automatically by means of the expression:

$$f_{STOP} = f_{MAX} \sqrt{\frac{P_C}{H_{MAX}}}$$

from the maximum pumping pressure of the pump and the feeding frequency at maximum rotating speed of the pump, constructive features of the pump, which allow automatically calculating the stop feeding frequency of the pump at which the pump must be stopped preventing the operator from having to manually and experimentally introduce said value of stop feeding frequency.

In a variant of the invention, the expression for calculating the stop feeding frequency of the pump incorporates a safety margin, said expression being:

$$f_{STOP} = f_{MAX} \sqrt{\frac{P_C}{H_{MAX}}} + f_{SAF}$$

Said safety margin allows staying within the constructional tolerances of the pump. In a specific variant, the safety margin is 1 Hz.

In another variant of the invention, the pump is stopped if the feeding frequency of the pump drops below the stop feeding frequency during a predetermined safety time, stopping the pump during pressure transitions created by closing the final valve of the system being prevented. If the type of valves of the system allows closing the passage of liquid in a very little space of time, an overpressure area will be created adjacent to the valve after it closes which will be transmitted by way of pressure wave through the ducts of the system for a transient time until the pressure of the system equalizes. It is therefore necessary that the pump is stopped after a predetermined safety time of at least said transient time after closing the valve. It has been observed that said predetermined safety time must be at least 5 seconds which is the transient time it takes for stabilizing the pressure of the conduit after closing a valve or faucet. It is recommendable to establish a value of said predetermined safety time of 10 seconds because in this manner it is assured that the pressure of the conduit has been re-stabilized in most of the systems before stopping the pump. Naturally the value of said predetermined safety time can be adjusted by the operator depending on the specific characteristics of each system.

In another variant, the step of obtaining the set point pressure of the system is automatically performed by means of measuring the pressure of the system at a determined instant, allowing automatically obtaining the set point pressure.

In another embodiment, the step of obtaining the set point pressure of the system is performed by manually introducing said set point pressure value.

The device for triggering the stop of a hydraulic pump of the present invention is of the type which comprises means for obtaining the pressure value of the hydraulic system in real time, such as a pressure sensor or an inlet for an analog or digital pressure reading; memory means for storing the pre-established set point pressure for the hydraulic system, the feeding frequency at maximum rotating speed of the hydraulic pump, and the maximum pumping pressure of the hydraulic pump; and means for monitoring and controlling the feeding frequency of the hydraulic pump suitable for determining and modifying the feeding frequency of the pump to match the pressure of the system with the pre-established set point pressure in the hydraulic system.

The device is essentially **characterized in that** it further comprises calculation means determining the stop feeding frequency of the pump by means of the following expression:

$$f_{STOP} = f_{MAX} \sqrt{\frac{P_C}{H_{MAX}}}$$

generating a stop signal of the pump if the feeding frequency reaches said stop feeding frequency.

In a variant of the invention, the calculation means of the device incorporate a safety margin, the stop feeding frequency of the pump being determined by means of the following expression:

$$f_{STOP} = f_{MAX} \sqrt{\frac{P_C}{H_{MAX}}} + f_{SAF}$$

In a variant of interest, the safety margin is 1 Hz allowing stopping the pump safely even when its constructive features are not the nominal characteristics of the pump provided by the manufacturer but rather they have been slightly changed as a result of tolerances during the construction and assembly thereof.

In another embodiment variant, the device comprises an interface for modifying the information stored in the memory means such as a keyboard and a display.

A hydraulic pump incorporating a controller device for a hydraulic pump and a hydraulic system comprising at least one pump incorporating a controller device is also disclosed.

## Brief Description of the Drawings

Figures 1a, 1b and 1c show a system with a pump provided with the device of the invention during successive phases;

Figure 2 depicts a diagram of the operation and of the method for stopping a hydraulic pump of the device of the invention;

Figure 3 depicts a diagram for calculating the stop feeding frequency of the pump;

Figure 4 shows a graph of the variation of the feeding frequency of the pump according to the flow rate of the system during the stoppage of the hydraulic pump of Figures 1a, 1b and 1c;

Figure 5a shows a time graph of the variation of the feeding frequency of the pump provided with the device of the invention shown in Figures 1a, 1b and 1c.

Figure 5b shows another time graph of the variation of the feeding frequency of the pump provided with the device of the invention; and

Figure 6 shows a system in which a pump provided with the device of the invention is incorporated.

## Description of the Invention

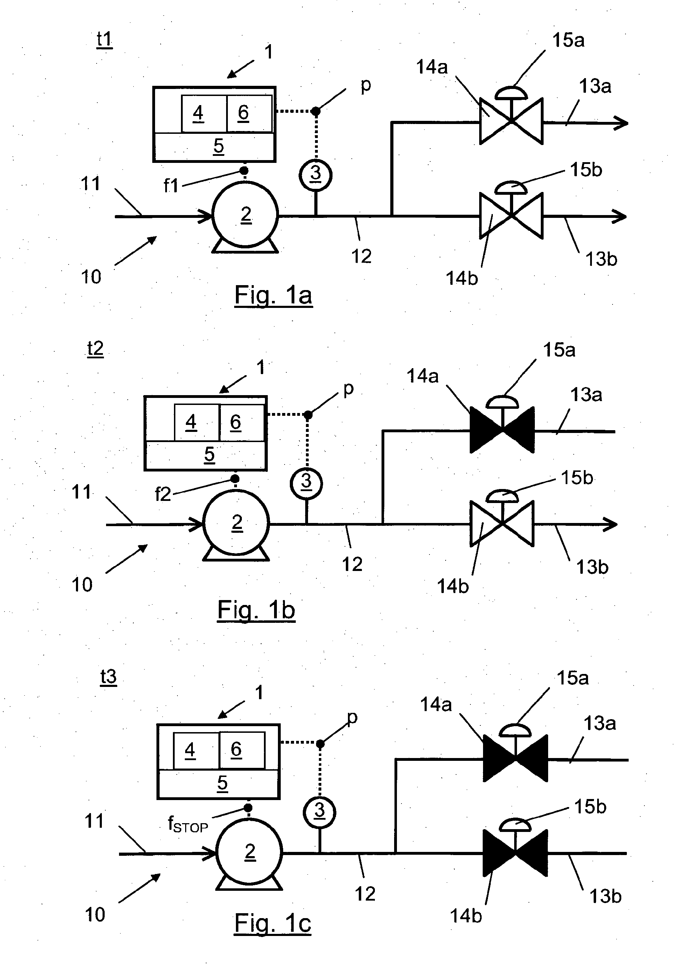

Figures 1a, 1b and 1c show different states of a hydraulic system 10 in which a pump 2 provided with a device 1 for stopping said hydraulic pump 2 has been installed. The pump 2 incorporates in a known manner a motor which, since it is fed at a feeding frequency f, rotates its shaft at a higher or lower speed according to the feeding frequency f. Said rotation of the motor shaft provides the rotating speed of the pump. The rotating speed of the motor and therefore of the pump 2 is usually directly proportional to the feeding frequency f. Depending on the constructive details of the motor of the pump 2 this ratio between the feeding frequency f of the motor and the frequency of rotation will be greater or less, by way of example, the rotating speed being 3000 revolutions per minute for a 50 Hz feeding frequency f and a rotating speed of 1500 revolutions per minute for a 25 Hz feeding frequency f

As can be observed in Figure 1, the device 1 is connected to a pressure sensor 3 of the system 10 for obtaining the value of the pressure p of the hydraulic system 10 in real time. Said device 1 also comprises internal memory means 4 which allow storing different variables such as the pre-established set point pressure $P_c$ for said hydraulic system 10, the feeding frequency at maximum rotating speed $f_{MAX}$ of the hydraulic pump 2; and the maximum pumping pressure $H_{MAX}$ of the hydraulic pump 2. Both the feeding frequency at maximum rotating speed $f_{MAX}$ of the pump 2 and the maximum pumping pressure $H_{MAX}$ are intrinsic to each hydraulic pump 2, the latter being determined during the construction thereof and the manufacturer providing them in the specification sheet of each pump 2. Usually, and to simplify the construction of the pump 2, the frequency of the electric network is taken as the feeding frequency at maximum rotating speed $f_{MAX}$. The maximum pumping pressure $H_{MAX}$ is experimentally obtained in a laboratory by feeding the pump 2 the feeding frequency at maximum rotating speed $f_{MAX}$ the flow rate pumped being zero, this value being provided to the installer for calculating the system.

The device 1 also has control means 5 for controlling the feeding frequency of the motor of the hydraulic pump 2 which allow varying the feeding frequency of said pump 2 and therefore the rotating speed of the pump 2, increasing or decreasing the rotating speed of the pump 2 to match the pressure of the system p with the previously pre-established set point pressure Pc for the hydraulic system 10.

As can be observed in Figures 1a, 1b and 1c, the hydraulic pump 2 is connected to a liquid inlet conduit 11 and an intermediate outlet conduit 12 of the pump 2, in which the pressure of the liquid must be the pre-established set point pressure $P_c$. Said intermediate conduit 12 is connected to valves 14a, 14b separating the intermediate conduit 12 from respective outlet conduits 13a, 13b through which the liquid must pass towards other sections of the system 10 which can be at another pressure or even outside of the system 10, becoming atmospheric pressure. In all the cases, the pressure of the system p must be kept at the set point pressure $P_c$ regardless of the number of valves 14a, 14b which are closed or open.

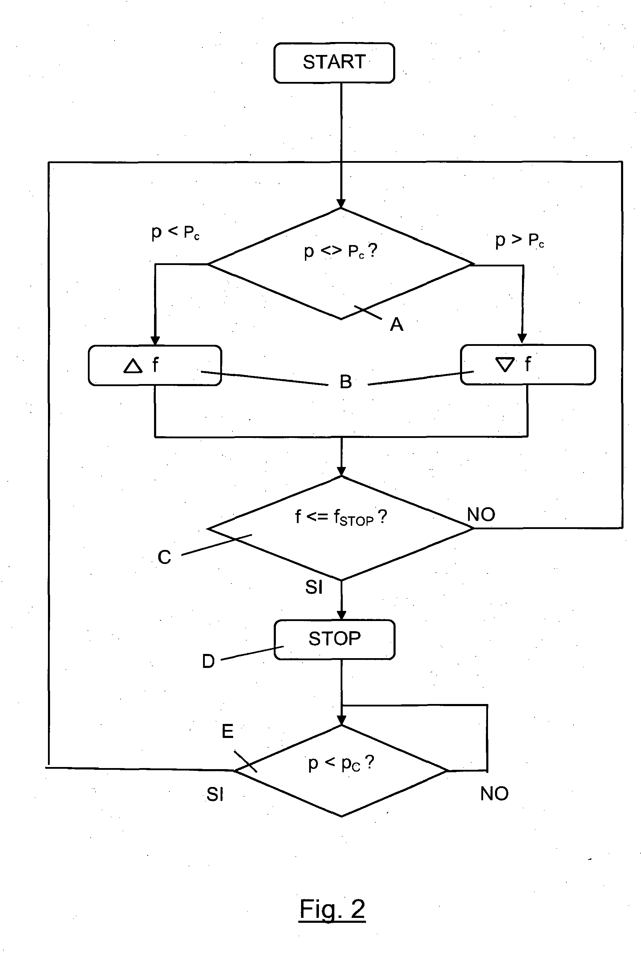

In a known manner, the device 1 modifies the feeding frequency f of the pump 2 to thus increase or reduce the rotating speed of the pump 2 and to keep the pre-established set point pressure $P_c$ in the intermediate conduit 12, following the cycle which is shown in Figure 2 and which will be described below.

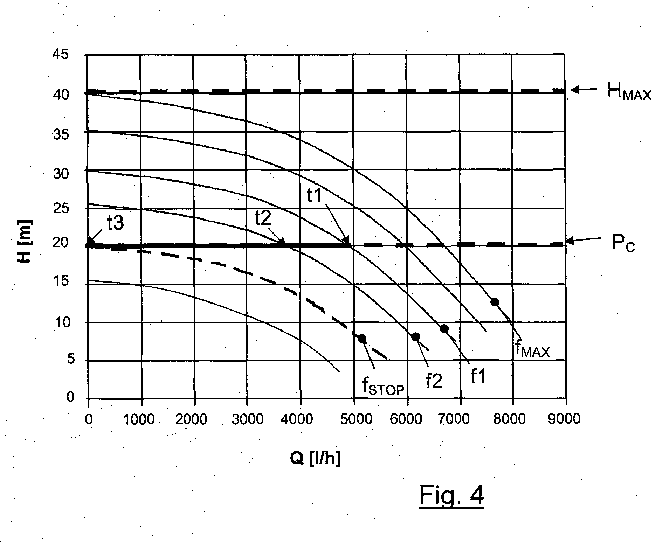

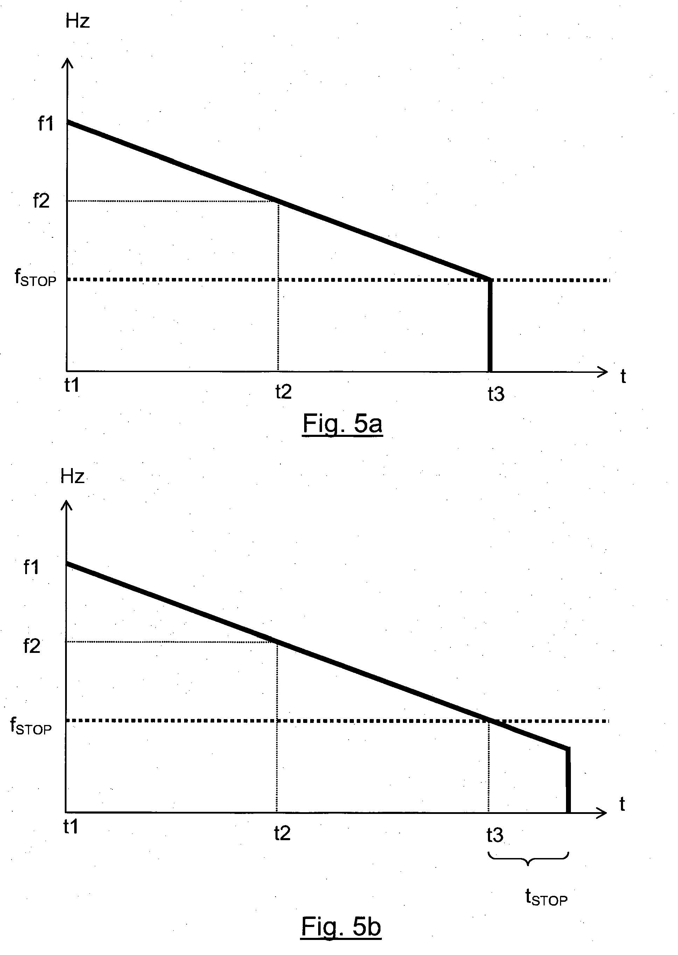

In the state shown in Figure 1a, the faucets 15a, 15b of the respective valves 14a, 14b are open at a first instant t1, allowing the liquid at the set point pressure $P_c$ in the intermediate conduit 12 to flow towards the respective outlet conduits 13a, 13b. In this first instant t1 the device 1 operates at a first feeding frequency f1 so that the pressure p of the intermediate conduit 12 is the set point pressure $P_c$. This situation can be observed in the graph shown in Figure 4 which at the first instant t1 the pressure of the system p is located on the characteristic curve at the first feeding frequency f1 at the set point pressure $P_c$. Likewise, in the time graph shown in the Figure 5a it is observed that at the first instant t1 the feeding frequency of the pump 2 is f1.

Upon closing the first faucet 15a such as shown in Figure 1b, the pressure of the intermediate conduit increases therefore the rotating speed of the pump 2 progressively drops until the pressure of the intermediate conduit matches with the set point pressure $P_c$ at a second time instant t2. This situation can be observed in the graph shown in Figure 4 which at the second instant t2 the pressure of the system p is located on the characteristic curve at the second feeding frequency f2 at the set point pressure $P_c$. Likewise in the time graph shown in Figure 5a it is observed that from the first instant t1 to the second instant t2 the feeding frequency of the pump f and therefore the rotating speed of the pump 2 has been reduced to f2.

Upon closing the second faucet 15b as illustrated in Figure 1c, and therefore the second valve 14b stops the passage of liquid, the liquid outlet of the system 10 is blocked, therefore the pressure of the intermediate sector 12 increases and therefore the rotating speed of the pump 2 drops until the feeding frequency f reaches the stop feeding frequency $f_{STOP}$ at a third time instant t3 in which the calculation means 6 generate a stop signal of the pump 2, the pump 2 therefore being stopped. This situation can be observed in the graph shown in Figure 4 which at the third instant t3 the pressure of the system p is located on the characteristic curve at the stop feeding frequency $f_{STOP}$ at the set point pressure $P_c$. Said stop feeding frequency $f_{STOP}$ is therefore that stop feeding frequency which characteristic curve is located at the set point pressure $P_c$ when the flow rate passing through the pump 2 is zero. Likewise in the time graph shown in Figure 5a it is observed that at the third instant t3, upon reaching the stop rotation frequency $f_{STOP}$, the pump is stopped. Naturally if any one of the valves 14a, 14b is opened, the pressure of the system p will drop below the set point pressure $P_c$, therefore the device 1 will activate the pump 2, establishing the rotating speed of the pump 2 which is necessary for re-establishing the set point pressure $P_c$ in the intermediate conduit 12 of the system 10 upon increasing the flow rate.

Figure 2 shows the method for operating the device 1 and the method applied for stopping the pump 2 described above in the sequence of Figures 1a, 1b and 1c. As can be observed, the feeding frequency f of the pump 2 and therefore its rotating speed is adjustable and is pre-established for a set point pressure $P_c$ which must be maintained in said system 10 based on comparing A the pressure of the fluid p of the system with the set point pressure $P_c$ of the reference system and varying B the feeding frequency f of said pump to match the pressure of the system p at the pre-established set point pressure, such as for example by closing one of the valves 14a, 14b in the manner illustrated above. In this case, upon reducing the rotating speed of the pump 2, the device 1 must verify C if the feeding frequency f of said pump 2 drops below the previously determined stop feeding frequency $f_{STOP}$ and if so stops D the pump until the pressure of the system p drops E below the set point pressure $P_c$.

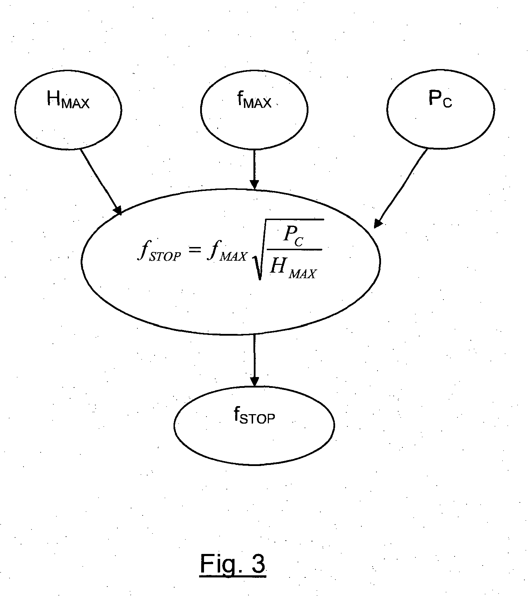

Figure 3 shows the method for determining the stop feeding frequency $f_{STOP}$ of the pump 2 which is initially calculated in the calculation means 6 of the device 1 from the constructive and intrinsic features of the pump 2: maximum pumping pressure $H_{MAX}$ of the pump 2 and feeding frequency at maximum rotating speed $f_{MAX}$, as well as the set point pressure $P_c$ of the system 10. Said stop feeding frequency $f_{STOP}$ is automatically determined by means of the expression:

$$f_{STOP} = f_{MAX} \sqrt{\frac{P_C}{H_{MAX}}}$$

This expression is obtained from the fundamental ratio of the pump:

$$\frac{H_B}{H_A} = \left(\frac{f_B}{f_A}\right)^2$$

$H_A$, $f_A$ characterizing the maximum frequency and the maximum pressure of the pump, i.e., $H_{MAX}$ and $f_{MAX}$ and $H_B$, $f_B$ the stop feeding frequency in which the pressure of the system p will be the set point pressure of the pump, i.e. $P_C$ and $f_{STOP}$ the equation is:

$$\frac{P_C}{H_{MAX}} = \left(\frac{f_{STOP}}{f_{MAX}}\right)^2$$

Wherein by isolating the $F_{STOP}$ of interest the expression described above for determining the stop feeding frequency $f_{STOP}$ of the pump is obtained:

$$f_{STOP} = f_{MAX} \sqrt{\frac{P_C}{H_{MAX}}}$$

Naturally, since said stop feeding frequency $f_{STOP}$ calculated is theoretical, in reality there may be small imbalances due to tolerances in the manufacturing of the pump or even due to the ageing of the latter, therefore establishing a safety margin $f_{SAF}$ which increases said stop feeding frequency $f_{STOP}$ may be necessary, the stop feeding frequency $f_{STOP}$ being determined by:

$$f_{STOP} = f_{MAX} \sqrt{\frac{P_C}{H_{MAX}}} + f_{SAF}$$

Since the device 1 modifies the feeding frequency f of the pump 2 in discrete steps of 0.5 Hz, a suitable value for said safety margin $f_{SAF}$ is 1 Hz.

Naturally, as a result of the fluctuations of the pressure of the system p due to closing the valves 14a, 14b, it is necessary establishing a predetermined safety time $t_{STOP}$ to determine that the pump 2 must be stopped as the feeding frequency f of the pump 2 reaches the stop feeding frequency $f_{STOP}$. This situation is shown in the time graph of Figure 5b in which the feeding frequency f of the pump is not stopped until a predetermined safety time $t_{STOP}$ lapses in which the feeding frequency of the pump 2 is below the stop feeding frequency $f_{STOP}$. A suitable time for said predetermined safety time $t_{STOP}$ is 5 seconds corresponding to the transient time of the fluctuating pressures generated in the intermediate conduit 12 of the system 10 after closing the second valve 14b. It is recommendable that said predetermined safety time $t_{STOP}$ is 10 seconds because in this manner it is assured that the pressure of the intermediate conduit 12 has been stabilized at the set point pressure $P_c$ in most of the systems before stopping the pump 2.

The intrinsic constructive values of the pump 2, maximum pumping pressure $H_{MAX}$ and feeding frequency at maximum rotating speed $f_{MAX}$, are stored in internal memory means 4 of the device 1, therefore by establishing the set point pressure $P_c$ of the system the stop feeding frequency $f_{STOP}$ of the pump 2 can automatically be determined by the calculation means 6 of the device 1. The set point pressure $P_c$ can be established by means of an interface 7 for modifying the information stored in the memory means 4 such as a keyboard and a display, in which the operator can establish the value of the set point pressure $P_c$ to be maintained in the system 10.

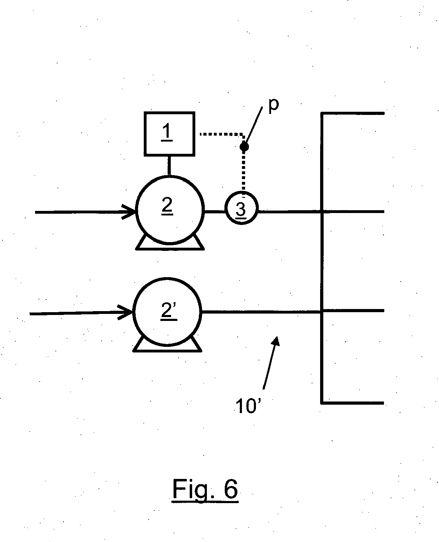

It is also possible that the device can automatically obtain the set point pressure $P_c$ of the system 10 by means of measuring the pressure of the system p at a determined instant. The operator is thus prevented from being able to introduce an incorrect set point pressure $P_c$ value through the interface 7, foreseeing to that end that the control means 5 determine the set point pressure $P_c$ as the stable pressure upon connecting the device 1 together with the pump 2 to a system 10' regulated and provided with a prior pump 2' at the set point pressure $P_c$ such as shown in Figure 6. The set point pressure $P_c$ is thus established either by connecting the device 1 or by signaling means such as a push button which can be pressed by the operator for establishing the pressure of the system p at that instant as set point pressure $P_c$.

## Claims

1. A method for stopping a hydraulic pump (2) with adjustable rotating speed in a hydraulic system pre-established at a set point pressure ($P_c$) comprising the steps of:

   - comparing (A) the pressure of the fluid (p) of the system with the set point pressure ($P_c$) of the system and varying (B) the rotating speed of said pump to match the pressure of the system with the pre-established set point pressure;
   - verifying (C) if the feeding frequency (f) of said pump drops below a predetermined stop feeding frequency ($f_{STOP}$) and if so stopping (D) the pump until the pressure of the system drops (E) below the set point pressure
   **characterized in that**
   the stop feeding frequency ($f_{STOP}$) of the pump is automatically determined by calculation means connected to the pump by means of the expression:

$$f_{STOP} = f_{MAX}\sqrt{\frac{P_C}{H_{MAX}}}$$

   from the maximum pumping pressure ($H_{MAX}$) of the pump and the feeding frequency at maximum rotating speed ($f_{MAX}$), intrinsic to the pump.

2. The method for stopping a hydraulic pump (2) according to any one of the preceding claims, **characterized in that** the expression for calculating the stop feeding frequency ($f_{STOP}$) of the pump incorporates a safety margin ($f_{SAF}$), said expression being:

$$f_{STOP} = f_{MAX}\sqrt{\frac{P_C}{H_{MAX}}} + f_{SAF}$$

3. The method for stopping a hydraulic pump (2) according to the preceding claim, **characterized in that** the safety margin ($f_{SAF}$) is 1 Hz.

4. The method for stopping a hydraulic pump (2) according to any one of the preceding claims, **characterized in that** the pump is stopped if the feeding frequency (f) of said pump drops below the stop feeding frequency ($F_{STOP}$) during a predetermined safety time ($t_{STOP}$).

5. The method for stopping a hydraulic pump (2) according to the preceding claim, **characterized in that** the predetermined safety time ($t_{STOP}$) is at least 5 seconds.

6. The method for stopping a hydraulic pump (2) according to the preceding claim, **characterized in that** the predetermined safety time ($t_{STOP}$) is 10 seconds.

7. The method for stopping a hydraulic pump (2) according to any one of the preceding claims, **characterized in that** the step of obtaining the set point pressure ($P_c$) of the system is automatically performed by means of measuring the pressure of the system at a determined instant.

8. The method for stopping a hydraulic pump (2) according to any one of claims 1 to 6, **characterized in that** the step of obtaining the set point pressure ($P_c$) of the system is performed by manually introducing said set point pressure value.

9. A device (1) for triggering the stop of a hydraulic pump (2) according to the method of any one of claims 1 to 8 comprising:

   - means for obtaining the pressure value (3) of the hydraulic system in real time;
   - memory means (4) for storing

      ◦ the pre-established set point pressure ($P_c$) for the hydraulic system;
      ◦ the feeding frequency at maximum rotating speed ($f_{MAx}$) of the hydraulic pump; and
      ◦ the maximum pumping pressure ($H_{MAX}$) of the hydraulic pump

   - control means (5) for controlling the feeding frequency (f) of the hydraulic pump suitable for determining and modifying the rotating speed of the pump to match the pressure of the system with the pre-established set point pressure in the hydraulic system;
   **characterized in that** it further comprises calculation means (6) determining the stop feeding frequency ($f_{STOP}$) of the pump by means of the following expression:

$$f_{STOP} = f_{MAX}\sqrt{\frac{P_C}{H_{MAX}}}$$

   generating a stop signal of the pump if the feeding frequency reaches said stop feeding frequency.

**10.** The controller device (1) according to the preceding claim, **characterized in that** the calculation means (6) incorporate a safety margin ($f_{SAF}$), the stop feeding frequency ($f_{STOP}$) being determined by means of the following expression:

$$f_{STOP} = f_{MAX}\sqrt{\frac{P_C}{H_{MAX}}} + f_{SAF}$$

**11.** The controller device (1) according to the preceding claim, **characterized in that** the safety margin ($f_{SAF}$) is 1 Hz.

**12.** The controller device (1) according to any one of claims 9 to 11, **characterized in that** it comprises an interface for modifying the information stored in the memory means (4).

**13.** A hydraulic pump (2) **characterized in that** it incorporates a controller device (1) for a hydraulic pump according to any one of claims 9 to 12.

**14.** A hydraulic system (10) **characterized in that** it comprises at least one pump (2) according to the preceding claim.

**Patentansprüche**

**1.** Verfahren zum Anhalten einer Hydraulikpumpe (2) mit einer anpassbaren Rotationsgeschwindigkeit in einem vorbestimmten Hydrauliksystem bei einem Sollwertdruck ($P_C$), umfassend die Schritte:

- Vergleichen (A) des Drucks des Fluids (p) des Systems mit dem Sollwertdruck ($P_C$) des Systems und Ändern (B) der Rotationsgeschwindigkeit der Pumpe, um den Druck des Systems dem vorbestimmten Sollwertdruck anzugleichen;
- Überprüfen (C), ob die Förderfrequenz (f) der Pumpe unter eine vorbestimmte Anhalteförderfrequenz ($f_{STOP}$) fällt, und, wenn dies der Fall ist, Anhalten (D) der Pumpe, bis der Druck des Systems unter den Sollwertdruck fällt (E), **dadurch gekennzeichnet, dass** die Anhalteförderfrequenz ($f_{STOP}$) der Pumpe automatisch durch an die Pumpe angeschlossene Berechnungsmittel mittels Gleichung bestimmt wird:

$$f_{STOP} = f_{MAX}\sqrt{\frac{P_C}{H_{MAX}}}$$

anhand des maximalen Pumpendrucks ($H_{MAX}$) der Pumpe und der Förderfrequenz bei maximaler Rotationsgeschwindigkeit ($f_{MAX}$) der Pumpe.

**2.** Verfahren zum Anhalten einer Hydraulikpumpe (2) nach einem der vorherigen Ansprüche, **dadurch gekennzeichnet, dass** die Gleichung zum Berechnen der Anhalteförderfrequenz ($F_{STOP}$) der Pumpe ein Sicherheitsmaß ($f_{SAF}$) beinhaltet, wobei die Gleichung folgendermaßen lautet:

$$f_{STOP} = f_{MAX}\sqrt{\frac{P_C}{H_{MAX}}}$$

**3.** Verfahren zum Anhalten einer Hydraulikpumpe (2) nach dem vorherigen Anspruch, **dadurch gekennzeichnet, dass** das Sicherheitsmaß ($f_{SAF}$) 1 Hz beträgt.

**4.** Verfahren zum Anhalten einer Hydraulikpumpe (2) nach einem der vorherigen Ansprüche, **dadurch gekennzeichnet, dass** die Pumpe angehalten wird, wenn die Förderfrequenz (f) der Pumpe während einer vorbestimmten Sicherheitszeit ($f_{STOP}$) unter die Anhalteförderfrequenz ($f_{STOP}$) fällt.

**5.** Verfahren zum Anhalten einer Hydraulikpumpe (2) nach dem vorherigen Anspruch, **dadurch gekennzeichnet, dass** die vorbestimmte Sicherheitszeit ($f_{STOP}$) zumindest 5 Sekunden beträgt.

**6.** Verfahren zum Anhalten einer Hydraulikpumpe (2) nach dem vorherigen Anspruch, **dadurch gekennzeichnet, dass** die vorbestimmte Sicherheitszeit ($f_{STOP}$) 10 Sekunden beträgt.

**7.** Verfahren zum Anhalten einer Hydraulikpumpe (2) nach einem der vorherigen Ansprüche, **dadurch gekennzeichnet, dass** der Schritt des Erhaltens des Sollwertdrucks ($P_C$) des Systems automatisch durch Messen des Drucks des Systems zu einem bestimmten Zeitpunkt erfolgt.

**8.** Verfahren zum Anhalten einer Hydraulikpumpe (2) nach einem der Ansprüche 1 bis 6, **dadurch gekennzeichnet, dass** der Schritt des Erhaltens des Sollwertdrucks ($P_C$) des Systems durch manuelles Einführen des Sollwertdruckwerts erfolgt.

**9.** Vorrichtung (1) zum Auslösen des Anhaltens einer Hydraulikpumpe (2) nach dem Verfahren nach einem der Ansprüche 1 bis 8, umfassend:

- Mittel zum Erhalten des Druckwerts (3) des Hydrauliksystems in Echtzeit;
- Speichermittel (4) zum Speichern

  ◦ des vorbestimmten Sollwertdrucks ($P_C$) für das Hydrauliksystem;
  ◦ der Förderfrequenz bei maximaler Rotationsgeschwindigkeit ($f_{MAX}$) der Hydraulikpumpe; und
  ◦ des maximalen Pumpendrucks ($H_{MAX}$) der Hydraulikpumpe

- Steuermittel (5) zum Steuern der Förderfrequenz (f) der Hydraulikpumpe, welche geeignet sind, die Rotationsgeschwindigkeit der Pumpe zu bestimmen und zu ändern, um den Druck des Systems dem vorbestimmten Sollwertdruck im Hydrauliksystem anzugleichen; **dadurch gekennzeichnet, dass** sie weiterhin Berechnungsmittel (6) umfasst, welche die Anhalteförderfrequenz ($f_{STOP}$) der Pumpe mittels folgender Gleichung bestimmen:

$$f_{STOP} = f_{MAX} \sqrt{\frac{P_C}{H_{MAX}}}$$

wobei ein Anhaltesignal der Pumpe erzeugt wird, wenn die Förderfrequenz die Anhalteförderfrequenz erreicht.

10. Steuervorrichtung (1) nach dem vorherigen Anspruch, **dadurch gekennzeichnet, dass** die Berechnungsmittel (6) ein Sicherheitsmaß ($f_{SAF}$) beinhalten, wobei die Anhalteförderfrequenz ($f_{STOP}$) durch folgende Gleichung bestimmt wird:

$$f_{STOP} = f_{MAX} \sqrt{\frac{P_C}{H_{MAX}}} + f_{SAF}$$

11. Steuervorrichtung (1) nach dem vorherigen Anspruch, **dadurch gekennzeichnet, dass** das Sicherheitsmaß ($f_{SAF}$) 1 Hz beträgt.

12. Steuervorrichtung (1) nach einem der vorherigen Ansprüche 9 bis 11, **dadurch gekennzeichnet, dass** sie eine Schnittstelle zum Ändern der in den Speichermitteln (4) gespeicherten Informationen umfasst.

13. Hydraulikpumpe (2), **dadurch gekennzeichnet, dass** sie eine Steuervorrichtung (1) für eine Hydraulikpumpe nach einem der Ansprüche 9 bis 12 beinhaltet.

14. Hydrauliksystem (10), **dadurch gekennzeichnet, dass** es zumindest eine Pumpe (2) nach dem vorherigen Anspruch umfasst.

## Revendications

1. Procédé d'arrêt d'une pompe hydraulique (2) à vitesse de rotation réglable dans un système hydraulique préréglé à une pression de consigne ($P_c$) comprenant les étapes qui consistent à :

   - comparer (A) la pression du fluide (p) du système avec la pression de consigne ($P_c$) du système et à varier la vitesse de rotation de ladite pompe (B) afin d'ajuster la pression du système à la pression de consigne préréglée ;
   - vérifier (C) si la fréquence d'alimentation (f) des baisses de ladite pompe en dessous d'une fréquence d'alimentation d'arrêt prédéterminée ($f_{STOP}$) et dans l'affirmative à arrêter (D) la pompe jusqu'à ce que la pression du système baisse (E) en dessous de la pression de consigne **caractérisée en ce que** la fréquence d'alimentation d'arrêt ($f_{STOP}$) de la pompe est automatiquement déterminée par des moyens de calcul connectés à la pompe au moyen de l'expression:

$$f_{STOP} = f_{MAX} \sqrt{\frac{P_C}{H_{MAX}}}$$

   de la pression maximale de pompage ($H_{MAX}$) de la pompe et la fréquence d'alimentation à la vitesse de rotation maximale ($f_{MAX}$), intrinsèque à la pompe.

2. Procédé d'arrêt d'une pompe hydraulique (2) selon l'une quelconque des revendications précédentes, **caractérisée en ce que** l'expression pour calculer la fréquence d'alimentation d'arrêt ($f_{STOP}$) de la pompe incorpore une marge de sécurité ($f_{SAF}$), ladite expression étant :

$$f_{STOP} = f_{MAX} \sqrt{\frac{P_C}{H_{MAX}}} + f_{SAF}$$

3. Procédé d'arrêt d'une pompe hydraulique (2) selon la revendication précédente, **caractérisée en ce que** la marge de sécurité ($f_{SAF}$) est de 1 Hz.

**4.** Procédé d'arrêt d'une pompe hydraulique (2) selon l'une quelconque des revendications précédentes, **caractérisée en ce que** la pompe est arrêté si la fréquence d'alimentation (f) de ladite pompe baisse en dessous de la fréquence d'alimentation d'arrêt (f$_{STOP}$) pendant une période de temps de sécurité prédéterminée (f$_{STOP}$).

**5.** Procédé d'arrêt d'une pompe hydraulique (2) selon la revendication précédente, **caractérisée en ce que** la période de temps de sécurité prédéterminée (f$_{STOP}$) est d'au moins 5 secondes.

**6.** Procédé d'arrêt d'une pompe hydraulique (2) selon la revendication précédente, **caractérisée en ce que** la période de temps de sécurité prédéterminée (f$_{STOP}$) est de 10 secondes.

**7.** Procédé d'arrêt d'une pompe hydraulique (2) selon l'une quelconque des revendications précédentes, **caractérisée en ce que** l'étape consistant à obtenir la pression de consigne (P$_c$) du système est automatiquement effectuée par les moyens de mesure de la pression du système à un moment déterminé.

**8.** Procédé d'arrêt d'une pompe hydraulique (2) selon l'une quelconque des revendications 1 à 6, **caractérisée en ce que** l'étape consistant en l'obtention de la pression de consigne (P$_c$) du système est effectuée par l'introduction manuelle de ladite valeur de la pression de point de consigne.

**9.** Dispositif (1) pour déclencher l'arrêt d'une pompe hydraulique (2) selon le procédé de l'une quelconque des revendications 1 à 8 comprenant :

- des moyens pour obtenir la valeur de pression (3) du système hydraulique en temps réel ;
- des moyens de mémoire (4) pour stocker

∘ la pression de consigne préréglée (P$_c$) pour le système hydraulique ;
∘ la fréquence d'alimentation à une vitesse de rotation maximale (f$_{MAX}$) de la pompe hydraulique ; et
∘ la pression de pompage maximale (H$_{MAX}$) de la pompe hydraulique

- des moyens de commande (5) pour commander la fréquence d'alimentation (f) de la pompe hydraulique apte pour déterminer et modifier la vitesse de rotation de la pompe afin d'ajuster la pression du système à la pression de consigne dans le système hydraulique ; **caractérisé en ce qu'**il comprend en outre des moyens de calcul (6) déterminant la fréquence d'alimentation d'arrêt (f$_{STOP}$) de la pompe au moyen de l'expression suivante :

$$f_{STOP} = f_{MAX}\sqrt{\frac{P_C}{H_{MAX}}}$$

en générant un signal d'arrêt de la pompe si la fréquence d'alimentation atteint ladite fréquence d'alimentation d'arrêt.

**10.** Le dispositif de commande (1) selon la revendication précédente, **caractérisé en ce que** les moyens de calcul (6) incorporent une marge de sécurité (f$_{SAF}$), la fréquence d'alimentation d'arrêt (f$_{STOP}$) étant déterminée au moyen de l'expression suivante :

$$f_{STOP} = f_{MAX}\sqrt{\frac{P_C}{H_{MAX}}} + f_{SAF}$$

**11.** Le dispositif de commande (1) selon la revendication précédente, **caractérisé en ce que** la marge de sécurité (f$_{SAF}$) est de 1 Hz.

**12.** Le dispositif de commande (1) selon l'une quelconque des revendications 9 à 11, **caractérisé en ce qu'**il comprend une interface pour modifier l'information stockée dans les moyens de la mémoire (4).

**13.** Une pompe hydraulique (2) **caractérisée en ce qu'**elle incorpore un dispositif de commande (1) pour une pompe hydraulique selon l'une quelconque des revendications 9 à 12.

**14.** Un système hydraulique (10) **caractérisé en ce qu'**il comprend au moins une pompe (2) selon la revendication précédente.

t1

**Fig. 1a**

t2

**Fig. 1b**

t3

**Fig. 1c**

Fig. 2

$$f_{STOP} = f_{MAX}\sqrt{\dfrac{P_C}{H_{MAX}}}$$

Fig. 3

Fig. 4

Fig. 5a

Fig. 5b

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006136202 A